# EUROPÄISCHE PATENTSCHRIFT

(11) **EP 0 579 081 B1**
(45) Veröffentlichungstag und Bekanntmachung des Hinweises auf die Patenterteilung: **25.09.1996**
(21) Anmeldenummer: 93110703.1
(22) Anmeldetag: 05.07.1993
(51) Int. Cl.: C08G 73/02, C08L 79/02, C09D 179/02

(54) **Bindemittelsystem**
Binder system
Système de liants

(30) Priorität: 17.07.1992 DE 4223599
(43) Veröffentlichungstag der Anmeldung: 19.01.1994
(73) Patentinhaber: BAYER AG, 51368 Leverkusen (DE)
(72) Erfinder: Reiners, Jürgen, Dr., D-51373 Leverkusen (DE); Wigger, Herbert, Dipl.-Ing., D-51371 Leverkusen (DE); Puchner, Fritz, Dr., D-50996 Köln (DE); Schwarz, Max, Dr., D-51379 Leverkusen (DE)

(56) Entgegenhaltungen:
- EP-A- 0 335 157
- CENTRAL PATENTS INDEX, BASIC ABSTRACTS JOURNAL Section Ch, Week 1886, 25. Juni 1986 Derwent Publications Ltd., London, GB; AN 86-115662

## Beschreibung

Die Erfindung betrifft ein neues Bindemittelsystem, ein Verfahren zur Herstellung sowie dessen Verwendung zum Pigmentdruck auf Faserstoffen.

Beim Pigmentdruck auf Faserstoffen werden Pigmente mit besonderen Bindemitteln, vorzugsweise durch einen thermischen Kondensationsvorgang, auf der Faser fixiert. Die Echtheitseigenschaften dieser Drucke werden nicht allein durch die Pigmente bestimmt, sondern sind auch von der Art des Bindemittels und von der Vollständigkeit des Kondensationsprozesses abhängig. Das Bindemittel kann auch den Griff der Ware beeinflussen. Dabei kann eine unerwünschte Verhärtung auftreten.

Weiterhin ist die Haltbarkeit und Stabilität des Bindemittels wichtig.

Aus der DE-PS 851 550 sind Polyharnstoffe aus Diisocyanaten und diprimären aliphatischen Diaminen bekannt. Diese Produkte haben sich als hervorragende Bindemittel für den Pigmentdruck bewährt. Nachteilig ist jedoch, daß die Produkte in ihrer Haltbarkeit begrenzt sind, was sich durch eine Viskositätsverminderung und einen entsprechenden Echtheitsabfall der Drucke bemerkbar macht.

In der DE-A 3 914 047 sind Bindemittel beschrieben, die sich durch verbesserte Haltbarkeit auszeichnen und deren Verwendung zu Drucken führt, die, insbesondere auf Textilien, einen weichen Griff aufweisen. Als Bindemittel werden Polyamide aus Adipinsäure und Diethylentriamin vorgeschlagen, die gegebenenfalls in Kombination mit einem Vernetzer bestehend aus einem Kondensationsprodukt aus Epihalogenhydrin und einem diprimären aliphatischen Amin eingesetzt werden können.

Als Vernetzer eignen sich generell Verbindungen, die mit dem Polyamid zu vernetzten Strukturen reagieren können. Solche Vernetzer sind z.B. aus der DE-PS 936 328 bekannt: Eine bevorzugte Gruppe von Vernetzern bilden Kondensationsprodukte aus Epihalogenhydrin (Epichlor-, Epibromhydrin) und diprimären aliphatischen Aminen, z.B. Bis-(3-aminopropyl)-methylamin oder Bis-(3-aminopropyl)-amin.

Halogenhydrin-Gruppen enthaltende Umsetzungsprodukte aus Polyaminen mit Epichlorhydrin oder 1,3-Dihalogen-2-hydroxy-propan sind bekannte Vernetzer.

So werden beispielsweise in den deutschen Patentschriften 17 20 905, 17 71 043 und 19 06 450 und den US-Patentschriften 29 26 154, 32 24 990 und 33 32 901 selbstvernetzende, wasserlösliche Reaktionsprodukte aus Epihalogenhydrinen und basischen Polyamidaminen oder Polyaminen bzw. Gemischen hieraus beschrieben, wobei jeweils ein Überschuß an Epihalogenhydrin pro Äquivalent an freien basischen Aminogruppen verwendet wird.

Nach einem weiteren bekannten Verfahren der deutschen Offenlegungsschrift 20 52 023 werden wasserlösliche, härtbare Harze durch Umsetzung von Epichlorhydrin mit Ammoniak und/oder Polyaminen gewonnen.

Bisher in der Praxis eingesetzte und durch die zitierte Vorliteratur beschriebene Bindemittel enthalten vernetzbare Harze aus Polyaminen und Epihalogenhydrin die mit 1,0 bis 2,5 Mol Epihalogenhydrin, bezogen auf basischen Stickstoff im Polyamid, hergestellt werden.

Die Produkte weisen einen nachweisbar hohen Gehalt an Halogenhydrin-Reaktivgruppen auf; diese sind notwendig, um ausreichend vernetzungsfähige, genügend reaktive Produkte zu erhalten.

Obwohl die Halogenhydrin-Gruppen-haltigen Umsetzungsprodukte aufgrund ihrer kationischen Ladung eine hohe Affinität gegenüber Faserstoffen aus Cellulose (Baumwolle) oder Wolle aufweisen, erfolgt im allgemeinen beim Einsatz als Vernetzer in Textildruckpasten keine vollständige Anlagerung an die Faser. Je nach Anwendungsform gelangen Anteile der Produkte unumgesetzt, z.B. beim Reinigen der Auftragswalzen in das Abwasser und tragen zu dessen Belastung mit organisch gebundenem Halogen bei. Außerdem enthalten die bekannten Produkte Nebenkomponenten wie 1,3-Dichlor-2-propanol (DCP) und 3-Chlor-1,2-propandiol (CPD) bzw. entsprechende Isomere beider Verbindungen. Unter dem ökologischen Aspekt sollte jedoch eine DCP-Bildung nach Möglichkeit vermieden oder doch so gering wie möglich gehalten werden. Bei den vorbekannten Bindemittelsystemen kann es bei deren Anwendung zum Textildruck in der Praxis zu Vergilbungen oder zu Farbtonverschiebungen der erhaltenen Drucke bei deren Lagerung im Dunkeln kommen.

Der Erfindung lag daher die Aufgabe zugrunde, ein neues Bindemittelsystem bereitzustellen, welches für eine Verwendung zum Pigmentdruck auf Faserstoffen geeignet ist, ohne die oben dargestellten nachteiligen Eigenschaften aufzuweisen.

Überraschenderweise wurde nun gefunden, daß das neue Bindemittelsystem beim Einsatz für den Pigmentdruck auf Faserstoffen eine Dunkelvergilbung der Drucke verhindert und außerdem eine wesentlich höhere Reibechtheit der Drucke bei der Bürstwäsche ergibt.

Die vorliegende Erfindung betrifft also ein Bindemittelsystem auf Basis
A) eines basischen, kationische Gruppen enthaltenden Polykondensats, das durch Umsetzung von Polyaminen (A1) und/oder Polyamidaminen (A2) mit Dichlorethan (A3) erhältlich ist,
B) eines Vernetzers, der aus Polyaminen und Epichlorhydrin, anschließende Umsetzung des Reaktionsprodukts mit einer oder mehreren Basen und anschließende Stabilisierung mit anorganischen Säuren und/oder Carbonsäuren, erhältlich ist und vorzugsweise jeweils weniger als 1,0 Gew.-% Dichlorpropanol und/oder Chlorpropandiol im Feststoff enthält,
   und gegebenenfalls
C) eines Homo- oder Copolymerisats einer Vinylverbindung.

Das Bindemittelsystem kann weitere übliche Zusätze wie z.B. Harnstoff oder Emulgatoren enthalten, vorzugsweise sind die Zusätze kationischer Natur wie z.B. kationische Verdickungsmittel.

Vorzugsweise handelt es sich um ein Bindemittelsystem auf Basis
A) eines basischen Polykondensats, mit einem Gehalt an kationischen Gruppen von 5 bis 10 000 Milliäquivalenten pro 100 g, vorzugsweise 50 bis 1000 Milliäquivalenten pro 100 g, das erhältlich ist durch Umsetzung
   A1) eines wasserlöslichen, aliphatischen Polyamins mit primären, sekundären und/oder tertiären Amino-Gruppen und gegebenenfalls Hydroxy-Gruppen oder Gemischen hieraus
      und/oder
   A2) eines Polyamidamins, bestehend aus Struktureinheiten, die sich von
      α) C₂-C₈-Dicarbonsäuren und
      β) wasserlöslichen, aliphatischen Polyaminen mit mindestens zwei primären und/oder sekundären Amino-Gruppen, gegebenenfalls tertiären Amino- und/oder Hydroxy-Gruppen oder deren Gemischen und gegebenenfalls
      γ) ω-Amino-α-carbonsäuren mit 3 bis 12 C-Atomen oder deren Lactamen, vorzugsweise Caprolactam, ableiten,
      mit
   A3) Dichlorethan
      in wäßriger Lösung mit einem Molverhältnis von A3) zu der Summe der mit A1) und A2) insgesamt eingesetzten Aminogruppen von 0,01:1 bis 0,7:1, vorzugsweise 0,05:1 bis 0,4:1,
B) eines Vernetzers, der erhältlich ist durch Umsetzung von
   B1) einem wasserlöslichen, aliphatischen Polyamin mit primären, sekundären und/oder tertiären Amino- oder Hydroxy-Gruppen oder Gemischen hieraus
      mit
   B2) einem Epihalogenhydrin oder 1,3-Dihalogen-2-hydroxy-propan
      im Molverhältnis von 0,6 bis 1,8 Mol der Komponente B2) pro Mol Basenstickstoff der Komponente B1),
   B3) Umsetzung der Produkte aus B1) und B2) mit einer Base im Molverhältnis von 0,05 bis 0,8 Mol Base pro Mol Halogenhydrin-Gruppe im Produkt aus B1) und B2)
      und
   B4) Umsetzung der nach B3) erhaltenen basischen Produkte mit einer anorganischen Säure und/oder einer Carbonsäure bis zu pH-Werten ≤4
   und gegebenenfalls
C) eines Homo- oder Copolymerisats einer Vinylverbindung.

Geeignete basische Polykondensate A) sind vorzugsweise solche, die aus Polyamidaminen A2), vorzugsweise Kondensationsprodukten aus Adipinsäure oder Glutarsäure (A2α) und Diethylentriamin oder Triethylentetramin (A2β) und gegebenenfalls Caprolactam (A2γ), durch Umsetzung mit 0,01 bis 0,7 mol Dichlorethan pro mol der insgesamt mit A1) und A2) eingesetzten Menge an basischem Stickstoff, erhältlich sind.

Bevorzugte Polyamidamine A2) sind Kondensate aus Adipinsäure und Diethylentriamin im Molverhältnis 1:0,90 bis 1:1,10. Sie haben ein als Gewichtsmittel (M_{w}) bestimmtes Molgewicht von 500 g/mol bis 10 000 g/mol und enthalten 200 bis 1000 Milliäquivalente Basenstickstoff pro 100 g Festharz. Vorzugsweise wird das Polyamidamin A2) als wäßrige 50%ige Lösung eingesetzt.

Außerdem sind solche Polykondensate A) geeignet, die aus Polyaminen A1) vorzugsweise aus Diethylentriamin, Tetramin, Pentamin, Hexamin oder höheren Homologen, oder Bis-(3-aminopropyl)methylamin mit 0,01 bis 0,7 mol Dichlorethan pro mol an basischem Stickstoff erhältlich sind. Besonders bevorzugte Polyamine A1) sind Bis-(3-aminopropyl)methylamin und Diethylentriamin.

Die Herstellung dieser Polykondensate A) ist an sich bekannt und z.B. in DE-A 2 756 489, DE-A 3 721 057, DE-A 2 756 431, EP-A 0 002 475 und DE 1 771 814 beschrieben.

Vorzugsweise handelt es sich bei den Polyamidaminen A2) um Kondensationsprodukte die erhältlich sind durch Umsetzung von α), β) und gegebenenfalls γ) im Molverhältnis β:α von 0,8:1 bis 1,2:1 und γ:α von 0 bis 2,5:1.

Die basischen Polykondensate A) enthalten im allgemeinen 5 bis 10 000 Milliäquivalente pro 100 g Feststoff an kationischen Gruppen, die in Form protonierter und/oder quarternierter Aminogruppen vorliegen.

Die Polykondensate A) sind verzweigt und besitzen eine breite Molgewichtsverteilung, die von etwa 1000 bis 10⁷ g/mol reicht.

Die 10 bis 30%igen Lösungen dieser Polykondensate A) weisen eine Viskosität zwischen 30 und 700 mPas auf (20°C).

Die Vernetzer B) haben ein als Gewichtsmittel bestimmtes Molekulargewicht (M_{w}) von vorzugsweise 1.000 bis 200.000 g/mol, insbesondere 2000 bis 100.000 g/mol.

Das erfindungsgemäße Bindemittelsystem enthält besonders bevorzugt Vernetzer B), die durch Umsetzung von einem wasserlöslichen Polyamin B1) der Formeln (I) oder (II) oder Gemischen hieraus 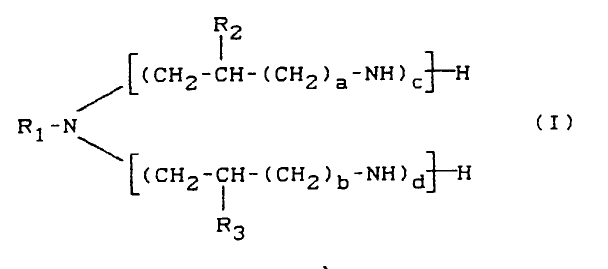 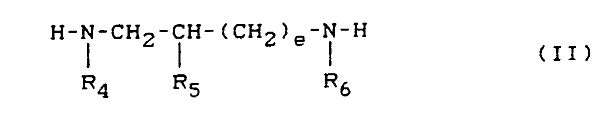 worin
- R₁, R₄ und R₆: unabhängig voneinander für Wasserstoff oder einen gegebenenfalls durch Hydroxy oder Amino substituierten C₁-C₅-Alkylrest,
- R₂, R₃ und R₅: unabhängig voneinander für Wasserstoff, Methyl oder Ethyl,
- a, b und e: unabhängig voneinander für eine ganze Zahl von 0 bis 4,
- c und d: unabhängig voneinander für eine ganze Zahl von 1 bis 6
stehen,
und/oder
einem durch Polymerisation von 1,2-Alkyleniminen hergestellten Poly(alkylenimin)
mit
B2) einem Epihalogenhydrin oder 1,3-Dihalogen-2-hydroxy-propan im Molverhältnis von 0,7 bis 1,5 Mol, bevorzugt 0,9 bis 1,2 Mol, der Komponente B2) pro Mol Basenstickstoff der Komponente B1),
   und
B3) Umsetzung der Produkte aus B1) und B2) mit einer Base im Molverhältnis von 0,05 bis 0,8 Mol, bevorzugt 0,1 bis 0,6 Mol, Base pro Mol Halogenhydrin-Gruppe des Produktes aus B1) und B2)
   und
B4) Umsetzung der nach B3) erhaltenen basischen Produkte mit einer halogenhaltigen anorganischen Säure und/oder einer Carbonsäure bis zu pH-Werten ≤4, bevorzugt 2 bis 4
   erhältlich sind.

Die wäßrigen Lösungen des Vernetzers B) weisen bei einem Feststoffgehalt von 5 bis 35 Gew.-%, vorzugsweise 10 bis 30 Gew.-%, eine Viskosität von 15 bis 400 mPas, vorzugsweise 20 bis 300 mPas, bei 25°C auf.

Als Vernetzer B) sind chlorarme Polykondensate aus Bis-(3-aminopropyl)-methylamin mit Epichlorhydrin bevorzugt.

Die Herstellung der Vernetzer B) erfolgt bevorzugt in wäßrigem Medium. Es können aber ebenfalls andere polare Lösungsmittel, wie Ethylenglykol, Diethylenglykol, Triethylenglykol, Polyethylenglykol, Glycerin, Isopropanol, Ethanol, Methanol, tert.-Butanol, Dimethylformamid oder Gemische hiervon mit Wasser verwendet werden.

Die Ausgangskomponenten B1), B2) werden zunächst als 15 bis 60 Gew.-%ige, vorzugsweise 20 bis 50 Gew.-%ige, Lösungen in Wasser oder vorstehend genannten anderen polaren Lösungsmitteln oder Gemischen hieraus mit Wasser 20 Minuten bis 20 Stunden bei einer Temperatur von 10 bis 40°C umgesetzt, bis der Anteil an Epichlorhydrin im Reaktionsgemisch weniger als 0.1% beträgt. Anschließend wird bei einer Temperatur von 20 bis 95°C, vorzugsweise 30 bis 80°C, weiter umgesetzt. Spätestens wenn die Lösungsviskosität der Mischung 300 mPa.s (25°C) erreicht hat, ist eine Zugabe von weiterem Lösungsmittel erforderlich, um eine vorzeitigte Vernetzung zu verhindern.

Bereits während der Polykondensation wird dann bei Temperaturen von 20 bis 95°C, vorzugsweise 30 bis 80°C, mit Hilfe einer Base gemäß B3) ein pH-Wert von 7,0 bis 14, vorzugsweise 7,5 bis 12, eingestellt.

Dabei ist es bevorzugt, vor der Zugabe der Base auf einen Feststoffgehalt von 15 bis 30 % zu verdünnen.

Als Basen eignen sich insbesondere anorganische Basen wie NaOH, KOH, LiOH, Ca(OH)₂, Ba(OH)₂, NH₃, Na₂CO₃, K₂CO₃, CaCO₃. Von den anorganischen Basen sind besonders bevorzugt NH₃, NaOH und/oder KOH.

Ebenfalls als Basen gut geeignet sind makroporöse Anionenaustauscher, die in ihrer aktiven Form Chloridionen absorbieren, beispielsweise die im Handel erhältlichen Produkte LEVATIT® MP 600 und DOWEX® SAR.

Die genannten Basen können einzeln oder in beliebigem Gemisch untereinander eingesetzt werden.

Falls als Base makroporöse Anionenaustauscher eingesetzt werden, ist es bevorzugt die festen Partikel nach einer Kontaktzeit von vorzugsweise 15 Minuten bis 8 Stunden bei einer Temperatur von 20 - 95°C von der Reaktionsmischung abzutrennen.

Unter Beibehalt basischer pH-Werte wird das Reaktionsgemisch anschließend 10 Minuten bis 10 Stunden, bevorzugt 15 Minuten bis 8 Stunden gerührt, bis das Gemisch eine Lösungsviskosität von 15 bis 400 mPa.s (25°C) aufweist.

Man gibt dann zur Unterbrechung der Polykondensation so viel Säure bzw. Säure-Derivat gemäß B4) zu, daß der pH-Wert der Lösung ≤ 4 ist, vorzugsweise bei 2,0 bis 4 liegt.

Als Säuren bzw. Säure-Derivate sind besonders geeignet:
1. Mineralsäuren bzw. sauer reagierende Derivate dieser Säuren, wie Amidosulfonsäure, schweflige Säure, Salzsäure, Salpetersäure, und besonders Schwefel- und Phosphorsäure, besonders bevorzugt Salzsäure,
2. gegebenenfalls Hydroxy-Gruppen enthaltende, Mono- oder Polycarbonsäuren bzw. Derivate dieser Säuren, wie Essigsäure, Essigsäureanhydrid, Propionsäure, Oxalsäure, Malonsäure, Bernsteinsäure, Glutarsäure, Adipinsäure, Maleinsäure, Ameisensaure und Citronensäure, besonders bevorzugt Ameisensäure und Essigsäure,
oder Gemische hieraus.

Durch partielles Entfernen von Lösungsmittel im Vakuum oder Zugabe von Lösungsmittel wird der Feststoffgehalt der fertigen Produkte anschließend auf den gewünschten Gehalt eingestellt.

### Als Polyamine (I) seien genannt:

Diethylentriamin, Triethylentetramin, Tetraethylenpentamin, Pentaethylenhexamin, Hexaethylenheptamin, Heptaethylenoctamin, Dipropylentriamin, Tripropylentetramin, Methyl-bis-(3-aminopropyl)-amin, Ethyl-bis-(3-aminopropyl)-amin, 2-Hydroxy-ethyl-bis-(3-aminopropyl)-amin, Dihexamethylentriamin, oder Gemische hieraus, bevorzugte Polyamine I sind Diethylentriamin und Methyl-bis(3-aminopropyl)amin,

### Als Diamine (II) seien erwähnt:

Ethylendiamin, N-(2-Hydroxyethyl)-ethylendiamin, N,N'-Dimethyl-ethylendiamin, 1,2-Diaminopropan, 1,3-Diamino-propan, N,N'-Dimethyl-1,3-diaminopropan, N-Methyl-1,3-diamino-propan und 1,6-Diaminohexan, vorzugsweise Ethylendiamin.

Bevorzugtes 1,2-Alkylenimin B1) ist Ethylenimin. Bevorzugte Beispiele für B2) sind Epichlorhydrin, Epibromhydrin und 1,3-Dichlor-2-hydroxy-propan.

In diesem Zusammenhang ist der Begriff "wasserlöslich" so zu verstehen, daß die als "wasserlöslich" bezeichneten Polyamine eine Löslichkeit von mindestens 2 g pro 100 g Wasser bei 20°C aufweisen, wobei homogene, einphasige Lösungen erhalten werden.

Durch geeignete Wahl des pH-Wertes, der Konzentration, der Temperatur und der Reaktionszeit ist es möglich, Vernetzer der verschiedensten Viskosität herzustellen, wobei die maximale Viskosität durch die Löslichkeit der Produkte begrenzt wird, da eine vorzeitige Vernetzung der Kondensationsprodukte vermieden werden muß. Die Kondensationsreaktionen lassen sich durch Säurezugabe jederzeit unterbrechen. Durch diesen Säurezusatz wird eine Stabilisierung der Kondensationsprodukte erreicht. Die Kondensationsprodukte reagieren im alkalischen pH-Bereich oder beim Auftrocknen oder bei Erwärmung auf Temperaturen von etwa 100°C unter Selbstvernetzung, wobei wasserunlösliche Produkte entstehen.

Gegebenenfalls enthält das erfindungsgemäße Bindemittelsystem ein Homo- oder Copolymerisat einer Vinylverbindung C), vorzugsweise ein Vinylacetat-, Methacrylsäure-, Methacrylsäurealkylester (-methyl-, ethyl-, butylester), Acrylsäure, Acrylsäurealkylester-(-methyl-, -ethyl-, butylester), Acrylnitril-, Dichlorethen-, Butadien-, Styrol-, Vinylpyrrolidon-, Vinylpyridin-, Vinylalkylether-, (Vinylmethylether-), Vinylalkohol-Homopolymerisat oder -Copolymerisat, oder deren Gemische. Solche (Co)Polymerisate sind z.B. aus DE-PS 908 133 und FR-PS 1 044 736 bekannt. Besonders bevorzugt wird ein Copolymerisat aus Acrylsäurebutylester, 1,1-Dichlorethen und gegebenenfalls Methacrylsäure eingesetzt.

Zur Herstellung des erfindungsgemäßen Bindemittelsystems werden jeweils bezogen auf Festsubstanz 0,5 bis 20, vorzugsweise 0,5 bis 5 Gewichtsteile A), 0,1 bis 20, vorzugsweise 0,1 bis 5 Gewichtsteile B) und gegebenenfalls 0,5 bis 40, vorzugsweise 0,5 bis 20 Gewichtsteile C) miteinander gemischt. Durch Verdünnen mit Wasser erhält man eine wäßrige Lösung oder Emulsion des Bindemittelsystems mit einem Feststoffgehalt von beispielsweise 15 bis 40 Gew.-%, vorzugsweise 15 bis 35 Gew.-%.

Auf die beschriebene Weise werden unter technisch einfachen und gut handhabbaren Bedingungen wäßrige Lösungen oder Emulsionen des Bindemittelsystems mit Feststoffgehalten bis zu 40 Gew.-% erhalten, die hervorragend als Bindemittel für pigmenthaltige Druckpasten eingesetzt werden können. Das erfindungsgemäße, durch Vermischen von A), B) und gegebenenfalls C) erhältliche Bindmittelsystem hat eine Verarbeitungszeit von etwa 24 Stunden.

Durch Zugabe von Säuren wie z.B. Essigsäure kann die Lagerstabilität des erfindungsgemäßen Bindemittelsystems aus A), B) und C) erhöht werden. Bei pH-Werten zwischen 4 und 6 wird eine Lagerstabilität von bis zu 4 Wochen erreicht.

Die vorliegende Erfindung betrifft daher weiterhin ein Verfahren zum Pigmentdruck auf Faserstoffen, dadurch gekennzeichnet, daß das erfindungsgemäße Bindemittelsystem als Bindemittel eingesetzt wird.

Vorzugsweise wird eine wäßrige Lösung oder Emulsion des erfindungsgemäßen Bindemittelsystems mit einem Feststoffgehalt von vorzugsweise 15 bis 35 Gew.-% als Bindemittel zum Pigmentdruck auf Faserstoffen eingesetzt.

Vorzugsweise dient das erfindungsgemäße Verfahren zum Pigmentdruck auf Textilien (Gewebe und Gewirke), insbesondere aus Baum-oder Zellwolle oder Mischgespinsten mit synthetischen Fasern, z.B. Polyamid, Polyester oder Polyacrylnitril; es kann jedoch auch für das Bedrucken von anderen Faserstoffen, z,B. Papier, insbesondere beim Tapetendruck, Verwendung finden.

Die praktische Ausführung des erfindungsgemäßen Verfahrens gestaltet sich in an sich bekannter Weise, indem man aus dem Pigment und dem erfindungsgemäßen Bindemittelsystem entweder direkt oder aus dessen einzelnen Komponenten A), B), und gegebenenfalls C) sowie dem Pigment eine Druckpaste herstellt und mit dieser Druckpaste auf einem Druckaggregat den Faserstoff bedruckt und anschließend, gegebenenfalls bei erhöhter Temperatur, kondensiert.

Eine vorzeitige Vernetzung der Druckpaste kann verhindert werden, indem ein pH-Wert von 4 bis 6 eingestellt wird.

Die Druckpaste kann weitere übliche Zusätze enthalten, z,B, Säuren (Essigsäure), Harnstoff, Emulgatoren, Verdickungsmittel (Schwerbenzin, Hydroxyethylcellulose, kationische Quellkörperverdicker), Knitterfest-, Versteifungs-, Weichmachungs- oder Mattierungsmittel.

Als Pigmente kommen alle üblichen organischen oder anorganischen Pigmente in Frage.

Die Fixierung der Drucke kann z.B, durch 14-tägige Lagerung bei Raumtemperatur oder durch Hitzebehandlung bei 90-150°C (Verweilzeit einige Minuten), durch neutrales Dämpfen oder mittels eines alkalischen Bades (3-5 g NaOH 38° Be je Liter) bei 50-80°C erfolgen.

Die erhaltenen Drucke zeichnen sich durch gute Echtheiten aus, ohne das Substrat zu beeinträchtigen (weicher Griff).

Das gemäß dem erfindungsgemäßen Verfahren eingesetzte Bindemittelsystem und damit auch die Textildruckpasten (vor der Fixierung) enthalten wesentlich geringere Mengen an organisch gebundenem Halogen und weniger 1,3-Dichlor-2-propanol (DCP) sowie 3-Chlor-1,2-propandiol (CPD) und deren Isomere und sind unter ökologischen Aspekten wesentlich fortschrittlicher.

So ist der organische Chlorgehalt der Vernetzer B) gegenüber dem Stand der Technik um 60 bis 95 % reduziert, der DCP-Gehalt und der CPD-Gehalt sind bis zu 99,9 % reduziert.

Das für das erfindungsgemäße Verfahren eingesetzte Bindemittelsystem besitzt filmbildende Eigenschaften.

Das erfindungsgemäße Bindemittelsystem zeigt bei der Anwendung auf dem Faserstoff außerdem den großen Vorteil gegenüber dem Stand der Technik, daß es einerseits beim Trocknen des Drucks sehr schnell vernetzt, daß es aber andererseits in saurer wäßriger Lösung bis zu Temperaturen von etwa 50°C sehr stabil sind, was sich günstig auf die Haltbarkeit der Druckpasten auswirkt.

Bei Verwendung des erfindungsgemäßen Bindemittelsystems kann in den Druckpasten ein Verdickungsmittel eingespart werden, wodurch ein besserer Griff und eine bessere Waschechtheit der bedruckten Textilien bewirkt werden. Das erfindungsgemäße Bindemittel system zeichnet sich gegenüber dem aus dem Stand der Technik bekannten Bindemittel durch eine verbesserte Lichtechtheit der erhaltenen Drucke aus. Weiterhin sind die Farbechtheiten der erhaltenen Textildrucke bei Lagerung im Dunkeln ausgezeichnet.

Außerdem wird beim Pigmentdruck mit dem erfindungsgemäßen Bindemittelsystem im Vergleich zu den aus der DE-A 3 914 047 bekannten Bindemitteln bei gleichem Einsatz an Wirksubstanz überraschenderweise eine wesentliche Verbesserung der Echtheiten der erhaltenen Drucke bei der Bürstwäsche erzielt.

Ein besonders gutes Ergebnis wird erzielt wenn das erfindungsgemäße Bindemittelsystem Polykondensate A) aus

| | |
|---|---|
| Adipinsäure | 1,000 Mol |
| Diethylentriamin | 1,025 Mol |
| Dichlorethan | 0,090 Mol |
| (17 %ige Lösung hat eine Viskosität von 80 mPas bei 23°C und pH 6-8) | |

enthält.

### Beispiel 1

### Herstellung eines Vernetzers B)

5,06 kg N-Methyl-N,N-bis(3-aminopropyl)amin werden in 36,59 kg H₂O gelöst. Bei einer Anfangstemperatur von 20 bis 25°C werden unter Stickstoffatmosphäre 10,63 kg Epichlorhydrin unter Rühren innerhalb von 45 bis 90 Minuten in die Vorlage gepumpt, so daß die Innentemperatur unter 35°C bleibt. Durch Kühlung wird die Temperatur unterhalb von 35°C gehalten. Bei 30°C bis 35°C wird noch 30 Minuten nachgerührt. Anschließend wird bei 55°C 90 Minuten gerührt. Dann werden 34,85 kg H₂O zugegeben und mit 45 %iger NaOH ein pH-Wert von 10 eingestellt. Man rührt bei pH 10 und 40°C solange, bis die gewünschte Viskosität erreicht ist. Dann wird mit 4,89 kg konzentrierter HCl und 1,66 kg Essigsäure auf pH 2,5 bis 3 eingestellt. Das Produkt wird gegebenenfalls kurz entgast oder mit H₂O verdünnt, je nach gefundenem Feststoffgehalt.

| | |
|---|---|
| Feststoffgehalt: | 20,0 % |
| pH: | 2,7 |
| Viskosität (25°C): | 50 mPa.s |
| organischer Chlorgehalt: | 1,0 Gew.-% |
| 1,3-Dichlor-2-propanol-Gehalt: | 0,05 % |
| 3-Chlor-1,2-propandiol-Gehalt: | 0,02 % |

### Beispiel 2

### Herstellung eines Vernetzers B)

509 g N-Methyl-N,N-bis(3-aminopropyl)amin werden unter Stickstoffatmosphäre in 3567 g H₂O gelöst. Bei 20 bis 25°C werden 1020 g Epichlorhydrin zugetropft. Es wird bei 30°C 30 Minuten nachgerührt und 90 Minuten auf 55°C erwärmt. Dann werden 3397 g H₂O zugegeben und mit NaOH auf pH 10 eingestellt. Bei pH 10 und 40°C wird ca. 100 Minuten gerührt, bis die gewünschte Viskosität erreicht ist. Dann werden 289 g konzentrierte H₂SO₄ zugegeben, so daß ein pH-Wert von 2,5 bis 3,0 resultiert.

| | |
|---|---|
| Feststoffgehalt: | 20,0 % |
| pH: | 2,6 |
| Viskosität (25°C): | 45 mPa.s |
| organischer Chlorgehalt: | 0,95 Gew.-% |
| 1,3-Dichlor-2-propanol-Gehalt: | <0,01 % |
| 3-Chlor-1,2-propandiol-Gehalt: | <0,005 % |

### Beispiel 3

### Herstellung eines Vernetzers B)

61,8 g N-Methyl-N,N-bis(3-aminopropyl)amin werden in 420,1 g H₂O gelöst. Bei einer Anfangstemperatur von 20 bis 25°C werden unter Stickstoff 112,8 g Epichlorhydrin unter Rühren innerhalb von 45 bis 90 Minuten in die Vorlage gepumpt, so daß die Innentemperatur unter 30°C bleibt. Bei 30°C bis 35°C wird unter Stickstoff 3 Stunden nachgerührt. Anschließend wird bei 50°C 60 Minuten gerührt. Dann werden 342 g H₂O zugegeben und mit 45 %iger NaOH ein pH-Wert von 7 gehalten. Man rührt bei pH 7 und 45°C solange, bis die gewünschte Viskosität erreicht ist. Dann wird mit 51,5 g konzentrierter HCl und 11,6 g Essigsäure auf pH 2,5 bis 3 eingestellt. Das Produkt wird gegebenenfalls kurz entgast oder mit H₂O verdünnt, je nach gefundenem Feststoffgehalt.

| | |
|---|---|
| Feststoffgehalt: | 20,0 % |
| pH: | 2,7 |
| Viskosität (25°C): | 50 mPas |
| organischer Chlorgehalt: | 1,4 Gew.-% |
| 1,3-Dichlor-2-propanol-Gehalt: | 0,01 % |
| 3-Chlor-1,2-propandiol-Gehalt: | 0,05 % |

### Beispiel 4

### Herstellung des basischen Polykondensats A

a) 146 g Adipinsäure und 105,6 g Diethylentriamin werden unter Wasserabspaltung bei 180 bis 200°C kondensiert (Destillat 36 g). Die erhaltene Schmelze des Polyamids wird in H₂O gelöst, so daß eine 50%ige Lösung erhalten wird.
   - Viskosität (20°C) :: 450 mPas
   - pH-Wert :: 11,5
   - Basen-N-Gehalt :: 500 mequ/100 g (bezogen auf Festharz)
b) Diese Lösung wird auf 25 % Feststoffgehalt verdünnt und auf 125°C erwärmt. Dann wird kontinuierlich Dichlorethan in den Autoklav eingepumpt. Die Dichlorethanzufuhr wird unterbrochen, wenn eine Viskosität von 20 mPas (20°C) erreicht ist.
   Es wird weiter kondensiert, bis eine Probe der Lösung bei einem Feststoffgehalt von 15 % eine Viskosität von 50 bis 100 mPas besitzt (20°C). Dann wird der Autoklav entspannt, im Vakuum entgast.
   - pH :: 7,5 bis 8,0
   - Feststoff :: 17 %
   - Viskosität:: 80 mPas

### Beispiel 5

Ein Mischpolymerisatlatex aus 70 Gewichtsteilen 1,1-Dichlorethen und 30 Gewichtsteilen Acrylsäurebutylester wird durch Polymerisation von 100 Gewichtsteilen des Monomerengemisches in 150 Gewichtsteilen der 5 %igen wäßrigen Lösung des Na-Salzes von handelsüblichen sulfonierten langkettigen Paraffinkohlenwasserstoffen (Mersolat) unter Zusatz von 2 ccm 1N H₂SO₄ und 0,6 Gewichtsteilen Natrium-Paraffinsulfinat (Mepasin-Sulfinat) bei 20°C im Druckautoklav bis zum vollständigen Umsatz der Monomeren hergestellt. Er zeigt nach einer Polymerisationsdauer von 15 Stunden einen Polymerisatgehalt von 39,5 %.

100-200 Gewichtsteile dieses Latex werden vermischt mit 5 Gewichtsteilen eines Umsetzungsproduktes aus 2 Mol Styrol und 1 Mol Phenol mit anschließender Oxethylierung (ca. 13,5 Ethylenoxideinheiten), und 40-60 Gewichtsteilen des basischen Polykondensats gemäß Beispiel 4. Es werden 785-615 Gewichtsteile einer Schwerbenzinemulsion, bestehend aus 24,4 - 18,8 Gewichtsprozent Wasser, 0,6 - 1,2 Gewichtsprozent Emulgator (ethoxyliertem Laurylalkohol) und 75 - 80 Gewichtsprozent Schwerbenzin (charakterisiert durch einen Siedebereich von 140 -200°C, vorzugsweise 160 -190°C, Zündtemperatur >30°C), hinzugefügt und mit 20-30 Gewichtsteilen Essigsäure auf pH 4,3-5,0 gebracht. Außerdem werden 50 bis 100 Gewichtsteile einer 20 %igen Lösung eines aus Epichlorhydrin und Bis-(3-aminopropyl)-methylamin erhaltenen Polykondensats aus Beispiel 1 hinzugefügt. Ein Zusatz von 20 bis 40 Gewichtsteilen Harnstoff sorgt für gute Druckeigenschaften derartiger Druckpasten. Zum Schluß werden je nach Farbtiefe bis zu 40 Gewichtsteile eines Kupferphthalocyanin-Pigmentteiges (C.I. Pigment Blue 15) zugegeben.

### Beispiel 6

Der Ansatz entspricht dem des Beispiel 5, es werden jedoch anstelle des Produkts aus Beispiel 1 50 bis 100 Gewichtsteile des Vernetzers aus Beispiel 2 eingesetzt.

### Beispiel 7

Der Ansatz entspricht dem von Beispiel 5, es werden jedoch anstelle des Produkts aus Beispiel 1 50 bis 100 Gewichtsteile des Vernetzers aus Beispiel 3 eingesetzt.

### Beispiel 8

Der Ansatz entspricht dem des Beispiels 5, es werden jedoch anstelle von Schwerbenzin 300-400 Gewichtsteile einer 4 %igen wäßrigen Hydroxyethylcellulose eingesetzt.

### Beispiel 9

Der Ansatz entspricht dem des Beispiels 5, es werden jedoch anstelle von Schwerbenzin ca. 70 Gewichtsteile eines kationischen synthetischen Verdickers mit einem Gehalt von ca. 30 % an aktiver Substanz eingesetzt.

### Beispiel 10

Der Ansatz entspricht dem des Beispiels 5, es werden jedoch anstelle des Phthalocyaninpigments bis zu 40 Gewichtsteile eines Azopigments (C.I. Pigment Yellow 83 oder C.I. Pigment Red 146) oder bis zu 60 Gewichtsteile Ruß oder bis zu 400 Gewichtsteile Titandioxid-Pigment eingesetzt.

### Beispiel 11

Der Ansatz entspricht dem des Beispiels 5; es werden jedoch anstelle des Phthalocyaninpigments bis zu 200 Gewichtsteile Titandioxidpigment oder bis zu 80 Gewichtsteile eines Azopigments (C.I. Pigment Yellow 83 oder C.I. Pigment Orange 34) oder bis zu 80 Gewichtsteile eines Phthalocyaninpigments (C.I. Pigment Blue 15 oder C.I. Pigment Green 7) eingesetzt.

### Beispiel 12

Die Druckpasten der Beispiele 5 bis 11 werden nach dem Rotationsfilmdruckverfahren mustergemäß auf gewebte oder gewirkte Textilien aus Baumwolle aufgebracht. Die Drucke werden 4 Minuten bei 140°C getrocknet. Man erhält Drucke mit guten Gebrauchseigenschaften bei weichem Griff.

### Beispiel 13

Die Druckpasten, gemäß den Beispielen 5 bis 11, werden nach dem Siebdruck- oder Rouleauxdruckverfahren mustermäßig auf Textilien gewebter oder gewirkter Art aus Baumwolle, Zellwolle oder Mischgespinsten mit synthetischen Fasern aus Polyamid, Polyester oder Polyacrylnitril aufgebracht.

Nach entsprechender Fixierung durch 14-tägige Lagerung bei Raumtemperatur, durch Hitzebehandlung bei 90 bis 150°C, durch neutrales Dämpfen oder mittels eines alkalischen Bades (3 bis 5 g NaOH 38° Be je Liter) bei 50 bis 80°C erhält man Drucke mit guten Gebrauchsechtheiten bei weichem Griff.

## Patentansprüche

1. Bindemittelsystem auf Basis
A) eines basischen, kationische Gruppen enthaltenden Polykondensats, das durch Umsetzung von Polyaminen (A1) und/oder Polyamidaminen (A2) mit Dichlorethan (A3) erhältlich ist,
B) eines Vernetzers, der aus Polyaminen und Epichlorhydrin, anschließende Umsetzung des Reaktionsprodukts mit einer oder mehreren Basen und anschließende Stabilisierung mit anorganischen Säuren und/oder Carbonsäuren, erhältlich ist und vorzugsweise jeweils weniger als 1,0 Gew.-% Dichlorpropanol und/oder Chlorpropandiol im Feststoff enthält,
und gegebenenfalls
C) eines Homo- oder Copolymerisats einer Vinylverbindung.

2. Bindemittelsystem gemäß Anspruch 1 auf Basis
A) eines basischen Polykondensats mit einem Gehalt an kationischen Gruppen von 5 bis 10 000 Miliäquivalenten pro 100 g, vorzugsweise 50 bis 1000 Milliäquivalenten pro 100 g, das erhältlich ist durch Umsetzung
A1) eines wasserlöslichen, aliphatischen Polyamins mit primären, sekundären und/oder tertiären Aminogruppen und gegebenenfalls Hydroxy-Gruppen oder Gemischen hieraus
und/oder
A2) eines Polyamidamins, bestehend aus Struktureinheiten, die sich von
α) C₂-C₈-Dicarbonsäuren und
β) wasserlöslichen, aliphatischen Polyaminen mit mindestens zwei primären oder sekundären Aminogruppen, gegebenenfalls tertiären Amino- und/oder Hydroxy-Gruppen oder deren Gemischen und gegebenenfalls
γ) ω-Amino-α-carbonsäuren mit 3 bis 12 C-Atomen oder deren Lactamen, vorzugsweise Caprolactam, ableiten,
mit
A3) Dichlorethan
in wäßriger Lösung mit einem Molverhältnis von A3) zu der Summe der mit A1) und A2) insgesamt eingesetzten Aminogruppen von 0,01:1 bis 0,7:1, vorzugsweise 0,05:1 bis 0,4:1,
B) eines Vernetzers, der erhältlich ist durch Umsetzung von
B1) einem wasserlöslichen, aliphatischen Polyamin mit primären, sekundären und/oder tertiären Amino- oder Hydroxy-Gruppen oder Gemischen hieraus
mit
B2) einem Epihalogenhydrin oder 1,3-Dihalogen-2-hydroxy-propan
im Molverhältnis von 0,6 bis 1,8 Mol der Komponente B2) pro Mol Basenstickstoff der Komponente B1),
B3) Umsetzung der Produkte aus B1) und B2) mit einer Base im Molverhältnis von 0,05 bis 0,8 Mol Base pro Mol Halogenhydrin-Gruppe im Produkt aus B1) und B2)
und
B4) Umsetzung der nach B3) erhaltenen basischen Produkte mit einer anorganischen Säure und/oder einer Carbonsäure bis zu pH-Werten ≤4
und gegebenenfalls
C) eines Homo- oder Copolymerisats einer Vinylverbindung.

3. Bindemittelsystem gemäß Ansprüchen 1 und 2, dadurch gekennzeichnet, daß als basische Polykondensate A) solche, die aus Polyamidaminen A2), vorzugsweise Kondensationsprodukten aus Adipinsäure oder Glutarsäure und Diethylentriamin oder Triethylentetramin und gegebenenfalls Caprolactam, durch Umsetzung mit 0,01 bis 0,7 mol Dichlorethan pro mol der insgesamt mit A1) und A2) eingesetzten Menge an basischen Stickstoff, erhältlich sind, eingesetzt werden.

4. Bindemittel system gemäß Ansprüchen 1 bis 3, dadurch gekennzeichnet, daß als Vernetzer B) solche die durch Umsetzung von einem wasserlöslichen Polyamin B1) der Formeln (I) oder (II) oder Gemischen hieraus 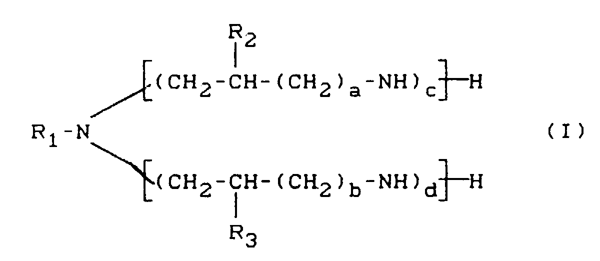 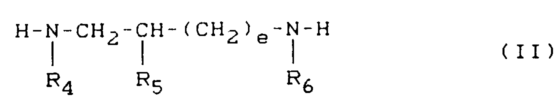 worin
R₁, R₄ und R₆ unabhängig voneinander für Wasserstoff oder einen gegebenenfalls durch Hydroxy oder Amino substituierten C₁-C₅-Alkylrest,
R₂, R₃ und R₅ unabhängig voneinander für Wasserstoff, Methyl oder Ethyl,
a, b und e unabhängig voneinander für eine ganze Zahl von 0 bis 4,
c und d unabhängig voneinander für eine ganze Zahl von 1 bis 6
stehen,
und/oder
einem durch Polymerisation von 1,2-Alkyleniminen hergestellten Poly(alkylenimin)
mit
B2) einem Epihalogenhydrin oder 1,3-Dihalogen-2-hydroxy-propan im Molverhältnis von 0,7 bis 1,5 Mol, bevorzugt 0,9 bis 1,2 Mol, der Komponente B2) pro Mol Basenstickstoff der Komponente B1),
und
B3) Umsetzung der Produkte aus B1) und B2) mit einer Base im Molverhältnis von 0,05 bis 0,8 Mol, bevorzugt 0,1 bis 0,6 Mol, Base pro Mol Halogenhydrin-Gruppe des Produktes aus B1) und B2)
und
B4) Umsetzung der nach B3) erhaltenen basischen Produkte mit einer halogenhaltigen anorganischen Säure und/oder einer Carbonsäure bis zu pH-Werten ≤4, bevorzugt 2 bis 4
erhältlich sind, eingesetzt werden.

5. Bindemittelsystem gemäß Ansprüchen 1 bis 4, dadurch gekennzeichnet, daß als C) ein Vinylacetat-, Methacrylsäure-, Methacrylsäurealkylester (-methyl-, ethyl-, butylester), Acrylsäure, Acrylsäurealkylester-(-methyl-, -ethyl-, butylester), Acrylnitril-, Dichlorethen-, Butadien-, Styrol-, Vinylpyrrolidon-, Vinylpyridin-, Vinylalkylether-, (Vinylmethylether-), Vinylalkohol-Homopolymerisat oder -Copolymerisat, oder deren Gemisch eingesetzt wird.

6. Verfahren zur Herstellung der Bindemittelgemische gemäß Ansprüchen 1 bis 5, dadurch gekennzeichnet, daß jeweils bezogen auf Feststoff 0,5 bis 20, vorzugsweise 0,5 bis 5 Gewichtsteile A), 0,1 bis 20, vorzugsweise 0,1 bis 5 Gewichtsteile B) und gegebenenfalls 0,5 bis 40, vorzugsweise 0,5 bis 20 Gewichtsteile C) miteinander gemischt werden.

7. Verfahren zum Pigmentdruck auf Faserstoffen, dadurch gekennzeichnet, daß das Bindemittelsystem gemäß Ansprüchen 1 bis 5 als Bindemittel eingesetzt wird.

8. Verfahren gemäß Anspruch 7, dadurch gekennzeichnet, daß es sich bei den Faserstoffen um Textilien handelt.

9. Faserstoffe, die mit Pigmentdruckpasten, enthaltend ein Bindemittelsystem gemäß Ansprüchen 1 bis 5, bedruckt wurden.

10. Pigmentdruckpasten enthaltend ein Bindemittelsystem gemäß Ansprüchen 1 bis 5.

## Claims

1. Binder system based on
A) a basic polycondensation product containing cationic groups and obtainable by reaction of polyamines (A1) and/or polyamidoamines (A2) with dichloroethane (A3),
B) a crosslinking agent obtainable from polyamines and epichlorohydrin, followed by reaction of the reaction product with one or more bases and followed by stabilisation with inorganic acids and/or carboxylic acids and preferably containing in each case less than 1.0% by weight of dichloropropanol and/or chloropropanediol in the solid,
and, if desired,
C) a homo- or copolymer of a vinyl compound.

2. Binder system according to Claim 1 based on
A) a basic polycondensation product whose cationic group content is 5 to 10,000 milliequivalents per 100 g, preferably 50 to 1000 milliequivalents per 100 g and which is obtainable by reaction of
A1) a water-soluble, aliphatic polyamine containing primary, secondary and/or tertiary amino groups and, if desired, hydroxyl groups or mixtures thereof
and/or
A2) a polyamidoamine consisting of structural units derived from
α) C₂-C₈-dicarboxylic acids and
β) water-soluble, aliphatic polyamines containing at least two primary and/or secondary amino groups and, if desired, tertiary amino and/or hydroxyl groups or mixtures thereof and, if desired,
γ) ω-amino-α-carboxylic acids having 3 to 12 C atoms or lactams thereof, preferably caprolactam,
with
A3) dichloroethane
in aqueous solution at a molar ratio of A3) to the sum of the total number of amino groups introduced by means of A1) and A2) of 0.01:1 to 0.7:1, preferably 0.05:1 to 0.4:1,
B) a crosslinking agent obtainable by reaction of
B1) a water-soluble, aliphatic polyamine containing primary, secondary and/or tertiary amino or hydroxyl groups or mixtures thereof
with
B2) an epihalogenohydrin or 1,3-dihalogeno2-hydroxy-propane
in a molar ratio of 0.6 to 1.8 mol of component B2) per mole of basic nitrogen of component B1),
B3) reaction of the products obtained from B1) and B2) with a base in the molar ratio of 0.05 to 0.8 mol of base per mole of halogenohydrin group in the product obtained from B1) and B2)
and
B4) reaction of the basic product obtained according to B3) with an inorganic acid and/or a carboxylic acid until a pH of ≤4 is reached and, if desired,
C) a homo- or copolymer of a vinyl compound.

3. Binder system according to Claims 1 and 2, characterised in that the basic polycondensation products A) used are those obtainable from polyamidoamines A2), preferably condensation products of adipic acid or glutaric acid with diethylenetriamine or triethylenetetramine and, if desired, caprolactam, by reaction with 0.01 to 0.7 mol of dichloroethane per mole of the total amount of basic nitrogen introduced by means of A1) and A2).

4. Binder system according to Claims 1 to 3, characterised in that the crosslinking agents B) used are those obtainable by reaction of a water-soluble polyamine B1) of the formula (I) or (II) or mixtures thereof 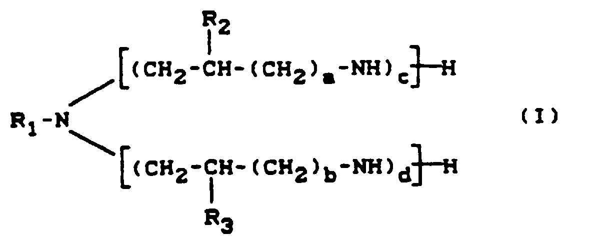 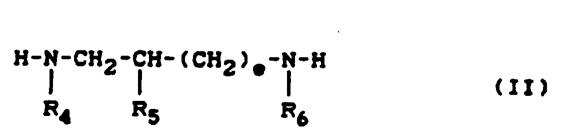 in which
R₁, R₄ and R₆, independently of one another, represent hydrogen or an unsubstituted or hydroxyl- or amino-substituted C₁-C₅-alkyl radical,
R₂, R₃ and R₅, independently of one another, represent hydrogen, methyl or ethyl,
a, b and e, independently of one another, represent an integer from 0 to 4,
c and d, independently of one another, represent an integer from 1 to 6,
and/or
a poly(alkyleneimine) prepared by polymerisation of 1,2-alkyleneimines
with
B2) an epihalogenohydrin or 1,3-dihalogeno-2-hydroxy-propane in a molar ratio of 0.7 to 1.5 mol, preferably 0.9 to 1.2 mol, of component B2) per mole of basic nitrogen of component B1),
and
B3) reaction of the products obtained from B1) and B2) with a base in a molar ratio of 0.05 to 0.8 mol, preferably 0.1 to 0.6 mol, of base per mole of halogenohydrin group of the product obtained from B1) and B2)
and
B4) reaction of the basic products obtained according to B3) with a halogen-containing inorganic acid and/or a carboxylic acid until a pH of ≤4, preferably 2 to 4, is reached.

5. Binder system according to Claims 1 to 4, characterised in that a vinyl acetate, methacrylic acid, alkyl (methyl, ethyl, butyl) methacrylate, acrylic acid, alkyl (methyl, ethyl, butyl) acrylate, acrylonitrile, dichloroethene, butadiene, styrene, vinylpyrrolidone, vinylpyridine, vinyl alkyl ether (vinyl methyl ether), vinyl alcohol homopolymer or copolymer or a mixture thereof is used as C).

6. Process for the preparation of the binder mixtures according to Claims 1 to 5, characterised in that 0.5 to 20, preferably 0.5 to 5, parts by weight of A), 0.1 to 20, preferably 0.1 to 5, parts by weight of B) and, if desired, 0.5 to 40, preferably 0.5 to 20, parts by weight of C), each relative to solids, are mixed with one another.

7. Process for pigment printing on fibre materials, characterised in that the binder system according to Claims 1 to 5 is used as the binder.

8. Process according to Claim 7, characterised in that the fibre materials are textiles.

9. Fibre materials printed with pigment printing pastes containing a binder system according to Claims 1 to 5.

10. Pigment printing pastes containing a binder system according to Claims 1 to 5.

## Revendications

1. Composition de liant à base de
A) un polycondensat basique contenant des groupes cationiques, qu'on obtient par réaction de polyamines (A1) et/ou de polyamidamines (A2) avec le dichloréthane (A3),
B) un agent réticulant qu'on peut obtenir à partir de polyamines et de l'épichlorhydrine, le produit de réaction étant ensuite mis à réagir avec une ou plusieurs bases puis stabilisé par des acides minéraux et/ou des acides carboxyliques, et qui contient de préférence moins de 1,0% en poids de dichloropropanol et/ou moins de 1,0 % en poids de chloropropanediol sur les matières solides,
et le cas échéant
C) un homopolymère ou co-polymère d'un composé vinylique.

2. Composition de liant selon la revendication 1 à base de
(A) un polycondensat basique à une teneur en groupes cationiques de 5 à 10 000 meq. pour 100 g, de préférence de 50 à 1 000 meq. pour 100 g, qu'on obtient en faisant réagir
A1) une polyamine aliphatique soluble dans l'eau contenant des groupes amino primaires, secondaires et/ou tertiaires, et le cas échéant des groupes hydroxy, ou un mélange de telles polyamines
et/ou
A2) une polyamidamine consistant en motifs de structure qui dérivent de
α) des acides dicarboxyliques en C₂-C₈ et
β) des polyamines aliphatiques solubles dans l'eau contenant au moins deux groupes amino primaires et/ou secondaires, le cas échéant des groupes amino tertiaires et/ou des groupes hydroxy, ou leurs mélanges, et le cas échéant
γ) des acides ω-amino-α-carboxyliques en C₃-C₁₂ ou leurs lactames, de préférence le caprolactame,
avec
A3) le dichloréthane
en solution aqueuse à un rapport molaire de 0,01:1 à 0,7:1, de préférence de 0,05:1 à 0,4:1 entre A3) et la somme des groupes amino introduits au total par A1) et A2),
B) un agent réticulant qu'on peut obtenir en faisant réagir
B1) une polyamine aliphatique soluble dans l'eau, contenant des groupes amino primaires, secondaires et/ou tertiaires, ou des groupes hydroxy, ou un mélange de telles polyamines
avec
B2) une épihalogénhydrine ou un 1,3-dihalogéno-2-hydroxypropane,
à un rapport molaire de 0,6 à 1,8 mol du composant B2) par mole d'azote basique du composant B1),
B3) en faisant réagir les produits obtenus à partir de B1) et B2) avec une base, à un rapport molaire de 0,05 à 0,8 mol de la base par mole de groupes halogénhydrines contenus dans le produit obtenu à partir de B1) et B2)
et
B4) en faisant réagir les produits basiques obtenus en B3) avec un acide minéral et/ou un acide carboxylique jusqu'à un pH inférieur ou égal à 4,
et le cas échéant
C) un homo- ou co-polymère d'un composé vinylique.

3. Composition de liant selon les revendications 1 et 2, caractérisée en ce que l'on utilise en tant que polycondensats basiques A) des produits obtenus à partir des polyamidamines A2), de préférence des produits de condensation de l'acide adipique ou de l'acide glutarique et de la diéthylènetriamine ou de la triéthylènetétramine et le cas échéant du caprolactame, par réaction avec 0,01 à 0,7 mol de dichloréthane par mole de l'azote basique introduit au total par A1) et A2).

4. Composition de liant selon les revendications 1 à 3, caractérisée en ce que l'on utilise en tant qu'agents réticulants B) des produits obtenus par réaction des polyamines solubles dans l'eau B1) de formule (I) ou (II) ou d'un mélange de telles polyamines : 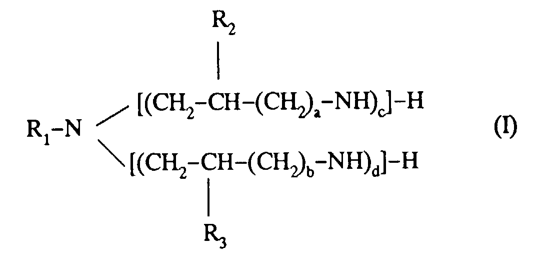 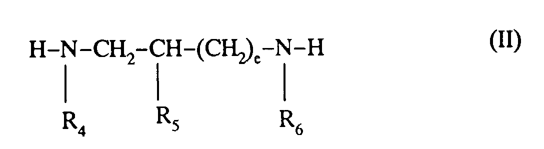 dans lesquelles
R₁, R₄ et R₆ représentent chacun, indépendamment les uns des autres, l'hydrogène ou un groupe alkyle en C₁-C₅ éventuellement substitué par un groupe hydroxy ou amino,
R₂, R₃ et R₅ représentent chacun, indépendamment les uns des autres, l'hydrogène, un groupe méthyle ou éthyle,
a, b et e sont des nombres entiers indépendants les uns des autres, allant de 0 à 4,
c et d sont des nombres entiers, indépendants les uns des autres, allant de 1 à 6,
et/ou
une poly(alkylèneimine) préparée par polymérisation de 1,2-alkylèneimines,
avec
B2) une épihalogénhydrine ou un 1,3-dihalogéno-2-hydroxypropane à un rapport molaire de 0,7 à 1,5 mol, de préférence 0,9 à 1,2 mol, du composant B2) par mole d'azote basique du composant B1),
et
B3) en faisant réagir les produits obtenus à partir de B1) et B2) avec une base dans un rapport molaire de 0,05 à 0,8 mol, de préférence de 0,1 à 0,6 mol de la base par mole de groupes halogénhydrine du produit obtenu à partir de B1) et B2)
et
B4) en faisant réagir les produits basiques obtenus en B3) ci-dessus avec un acide minéral contenant un halogène et/ou un acide carboxylique jusqu'à un pH inférieur ou égal à 4 et allant de préférence de 2 à 4.

5. Composition de liant selon les revendications 1 à 4, caractérisée en ce que l'on utilise en tant que composant C) un homo- ou copolymère de l'acétate de vinyle, de l'acide méthacrylique, d'un méthacrylate d'alkyle (de méthyle, d'éthyle, de butyle), de l'acide acrylique, d'un acrylate d'alkyle (de méthyle, d'éthyle, de butyle), de l'acrylonitrile, du dichloréthylène, du butadiène, du styrène, de la vinylpyrrolidone, de la vinylpyridine, d'un éther vinylalkylique (éther vinylméthylique), de l'alcool vinylique, ou un mélange de tels polymères.

6. Procédé de préparation de la composition de liant selon les revendications 1 à 5, caractérisé en ce que l'on mélange entre eux de 0,5 à 20, de préférence de 0,5 à 5 parties en poids de A), de 0,1 à 20, de préférence de 0,1 à 5 parties en poids de B) et le cas échéant de 0,5 à 40, de préférence de 0,5 à 20 parties en poids de C), toutes ces indications se rapportant aux matières solides.

7. Procédé pour l'impression pigmentaire sur des matières fibreuses, caractérisé en ce que l'on utilise en tant que liant la composition de liant selon les revendications 1 à 5.

8. Procédé selon la revendication 7, caractérisé en ce que les matières fibreuses sont des textiles.

9. Matières fibreuses imprimées à l'aide de pâtes d'impression pigmentaires contenant une composition de liant selon les revendications 1 à 5.

10. Pâte d'impression pigmentaire contenant une composition de liant selon les revendications 1 à 5.
